# EUROPÄISCHE PATENTSCHRIFT

(11) **EP 1 066 871 B1**
(45) Veröffentlichungstag und Bekanntmachung des Hinweises auf die Patenterteilung: **24.01.2007**
(21) Anmeldenummer: 00114432.8
(22) Anmeldetag: 05.07.2000
(51) Int. Cl.: B01D 45/08, B01D 50/00

(54) **Vorrichtung zum Abscheiden von Flüssigkeitstropfen aus strömenden Gasen, insbesondere Luft**
Device for separating liquid drops from a gas flow, in particular from air
Dispositif pour la separation des gouttes de liquide d'un courant gazeux, en particulier de l'air

(30) Priorität: 07.07.1999 DE 19931388
(43) Veröffentlichungstag der Anmeldung: 10.01.2001
(73) Patentinhaber: Mackowiak, Jerzy, Dr.-Ing. habil., 44801 Bochum (DE)
(72) Erfinder: Mackowiak, Jerzy, Dr.-Ing. habil., 44801 Bochum (DE)
(74) Vertreter: Volpert, Marcus

(56) Entgegenhaltungen:
- EP-A- 0 074 441
- EP-A- 0 489 575
- DE-A- 2 256 768
- US-A- 4 204 847
- US-A- 4 484 937
- US-A- 4 872 890
- US-A- 4 878 929
- US-A- 4 897 095
- US-A- 5 178 654

## Beschreibung

Die Erfindung bezieht sich auf eine Vorrichtung zum Abscheiden von Flüssigkeitstropfen aus strömenden Gasen, insbesondere Luft.

Der Begriff "Gas" soll hier sämtliche Gase, einschließlich Luft, und Dämpfe sowie deren Gemische, insbesondere auch Wasserdampf und sämtliche Trägergase, z.B. Rauchgase nach Verbrennungsprozessen, umfassen.

Solche Vorrichtungen sind allgemein als Tropfenabscheider oder Flüssigkeitsabscheider bekannt. Sie arbeiten beispielsweise als Ölabscheider nach Kompressoren, Kondensatabscheider in Dampfleitungen und Abscheider in Erdgasleitungen zum Entfernen der kondensierten höheren Kohlenwasserstoffe, die durch das Entspannen beim Weiterleiten ausgefallen sind. Die abzuscheidenden Flüssigkeiten treten üblicherweise als feiner Nebel mit Tropfendurchmessern < 100 µm, als Flüssigkeitstropfen oder als Flüssigkeitsfilm auf

Aus der Praxis sind sogenannte Prallflächenabscheider bekannt, welche in Strömungsrichtung des Gases ein gekrümmtes Profil aufweisen. Der durch einen derartigen Abscheider strömende Gasstrom wird durch das gekrümmte Profil einer mehr oder weniger abrubten Richtungsänderung unterworfen. Die Abscheidung der Flüssigkeitstropfen erfolgt daher nach dem Trägheitsprinzip. Durch die Krümmung des Profils werden die Flüssigkeitstropfen nämlich an die Profilinnenflächen geschleudert und an daran ausgebildeten Fangnasen abgeführt. Prallflächenabscheider arbeiten also nach dem Prinzip der Zentrifugalkraft.

Der sogenannte Fraktionsabscheidegrad eines Prallflächenabscheiders ist eine Funktion der Tropfengröße und der Gasgeschwindigkeit. Üblicherweise wird ein Fraktionsabscheidegrad von 99,9 % für Tropfen ≥ 80 µm bei einer Gasgeschwindigkeit von 2 m/s und für Tropfen ≥ 38 µm bei einer Gasgeschwindigkeit von 4 m/s erreicht. Die vorgenannten Werte gelten bei einer Temperatur von 20 °C und einem Umgebungsdruck von 1 bar.

Vorteile bietet ein solcher Prallflächenabscheider bei der Gasreinigung insbesondere dann, wenn die im Gas verteilten Flüssigkeitstropfen mit Feststoffen oder Stäuben beladen sind. Nachteilig ist, daß Tropfendurchmesser unterhalb des sogenannten Grenztropfendurchmessers nicht aus dem Gasstrom abgeschieden werden können, so daß das den Prallflächenabscheider verlassende Gas üblicherweise mit Wassertropfen beladen ist, deren Durchmesser kleiner als der sogenannte Grenztropfendurchmesser des Prallflächenabscheiders ist. In dem vorerwähnten Beispiel werden demnach bei Gasgeschwindigkeiten von 4 m/s Flüssigkeitstropfen mit einem Durchmesser < 38 µm bzw. bei einer Gasgeschwindigkeit von 2 m/s Flüssigkeitstropfen mit einem Durchmesser < 80 µm nicht abgeschieden.

In jüngster Zeit geht der Trend in der industriellen Technik dahin, eine immer feinere Abscheidung vorzunehmen, um nachfolgend angeschlossene Apparate, wie zum Beispiel Wärmetauscher, Elektrofilter, Ventilatoren, besser zu schützen und die immer engeren Abgasvorschriften einzuhalten.

Aus der Praxis sind ferner sogenannte Demister, auch Entfeuchter oder Gestrickabscheider genannt, bekannt. Diese bestehen beispielsweise aus Stahlwolle, wobei die Flüssigkeitstropfen durch Adhäsionskräfte oder durch die Kapillarwirkung der eingebauten Materialien abgeschieden werden. Die spezifische Oberfläche eines derartigen Demisters beträgt üblicherweise etwa zwischen 100 und 500 m²/m³. Bei gleicher Leistung ermöglicht ein Fraktionsabscheidegrad von 99,9 % hier eine Abscheidung von Tropfendurchmessern ≥ 8 µm bei einer Gasgeschwindigkeit von 4 m/s und ≥ 10 µm bei einer Gasgeschwindigkeit von 2 m/s. Auch in diesem Fall gelten die Angaben bei einer Temperatur von 20 °C und einem Luftdruck von 1 bar. Daraus folgt, daß mit Hilfe von Demistern Tropfen mit einem erheblich kleineren Durchmesser aus einem strömenden Gas als im Vergleich zu den vorgenannten Prallflächenabscheidern abgeschieden werden können.

Nachteilig ist dabei allerdings, daß das Gas-/Flüssigkeitsgemisch keinen hohen Staubanteil aufweisen darf und daß die im zu reinigenden Gasstrom enthaltene Wassermenge begrenzt ist. Bei zu hoher Staubbelastung bzw. bei zu großer, im Gasstrom enthaltener Wassermenge setzt sich der Demister schnell zu bzw. läuft dieser schnell mit Flüssigkeit voll, so daß er bald seine Flutgrenze erreicht. Dem Vorteil einer wesentlich feineren Tropfenabscheidung steht demnach der Nachteil einer geringeren Staubbelastung und eines geringeren, zulässigen Wasseranteils im Gasstrom entgegen.

Eine Vorrichtung zum Abscheiden von Flüssigkeitstropfen aus strömenden Gasen gemäß dem Oberbegriff des Patentanspruchs 1 ist aus der EP 0 074 441 A1 bekannt. Bei dieser Vorrichtung weist der dem Prallflächenabscheider nachgeordnete Demister eine Vielzahl von Lagen aus benetzbaren Fasern auf. Die einzelnen Lagen des Demisters sind identisch ausgebildet.

Die aus der US-A-4 872 890 bekannte Vorrichtung umfasst drei unterschiedliche Abscheider, nämlich einen ersten Vorabscheider, in den das mit Flüssigkeitstropfen beladene Gas über einen Stutzen eintritt. Das beladene Gas gelangt tangential in einen Ringraum, in dem das Gas, bevor es in eine innere Kammer eintritt, mehrfach umgelenkt wird. Die letztgenannte Vorrichtung umfasst ferner einen zweiten Vorabscheider aus Glasfasern. Schließlich hat die letztgenannte Vorrichtung auch einen Hauptabscheider, welcher zwei im Abstand nebeneinander angeordnete Glasfaserschichten aufweist. Die stromabwärts gelegene, radial außen angeordnete Glasfaserschicht besteht aus gröberen Fasern als die radial innen angeordnete Faserschicht.

Der Erfindung liegt die Aufgabe zugrunde, eine Vorrichtung der eingangs erwähnten Art zu schaffen, die wirtschaftlicher arbeitet und insbesondere einen größeren Tropfendurchmesserbereich abscheiden kann.

Diese Aufgabe wird erfindungsgemäß durch eine Vorrichtung mit den Merkmalen des Patentanspruchs 1 gelöst.

Vorteilhafte Weiterbildungen sind Gegenstand der Unteransprüche.

Durch die Kombination von erstem, als Vor- oder Grobabscheider wirkendem Tropfenabscheider und zweitem, als Nach- oder Feinabscheider wirkendem Tropfenabscheider ist eine einfache Möglichkeit geschaffen, die Vorteile beider Abscheiderarten, nämlich eines Prallflächenabscheiders sowie eines Demisters, nutzen zu können, ohne deren jeweilige Nachteile zu übernehmen. Die erfindungsgemäße Vorrichtung ist somit auf der einen Seite in der Lage, Gase mit beträchtlichen Wassermengen und mit Feststoffen oder Stäuben beladene Gase zu verarbeiten und gleichzeitig eine sehr feine Tropfenabscheidung vorzunehmen, so daß das die erfindungsgemäße Vorrichtung verlassende Gas als praktisch vollständig gereinigt anzusehen ist und demnach nahezu keinen, für die Praxis noch bedeutenden Flüssigkeitsanteil enthält. Die erfindungsgemäße Vorrichtung nimmt eine bereichsweise Abscheidung vor. Der erste Tropfenabscheider arbeitet als sogenannter Vor- oder Grobabscheider, der zweite Tropfenabscheider als dem ersten Tropfenabscheider nachgeordneter oder Feinabscheider. Die erfindungsgemäße Vorrichtung arbeitet daher sehr viel wirtschaftlicher als die herkömmlichen Abscheider und weist eine erheblich verbesserte Standzeit im Vergleich zu bekannten Vorrichtungen auf. Auf Grund der daraus resultierenden längeren Wartungs- und Emeuerungsintervallen sind auch die Betriebskosten der erfindungsgemäßen Vorrichtung niedriger als diejenigen bekannter Vorrichtungen. Die erfindungsgemäße Vorrichtung kann mit einer höheren Anströmgeschwindigkeit als ein herkömmlicher Demister betrieben werden. Außerdem ist die Flutgrenze der erfindungsgemäßen Vorrichtung deutlich zu höheren Werten hin verschoben, so daß die erfindungsgemäße Vorrichtung einen weiteren Arbeitsbereich als ein herkömmlicher Abscheider aufweist. Außerdem verstopft die erfindungsgemäße Vorrichtung weniger leicht als ein herkömmlicher Demister.

Der erste Tropfenabscheider ist ein Prallflächenabscheider und der zweite Tropfenabscheider ein Demister. Diese Abscheider sind auf dem Markt bereits bekannt und ohne weiteres verfügbar. Sie sind schon seit vielen Jahren im Einsatz, so daß auch bereits installierte, herkömmliche Anlagen, welche lediglich einen Prallflächenabscheider oder einen Demister aufweisen, durch Ergänzung des jeweils fehlenden Abscheiders kostengünstig umgerüstet werden können. Die Auslegung der bekannten Abscheider unterliegt den bekannten physikalischen Gesetzmäßigkeiten, so daß auch die Auslegung der erfindungsgemäßen Vorrichtung in der Praxis keine Probleme bereitet.

Gemäß einer bevorzugten Weiterbildung der Erfindung sind erster Tropfenabscheider und zweiter Tropfenabscheider derart übereinander angeordnet, daß letzterer auf ersterem aufliegt. Diese Weiterbildung hat einerseits den Vorteil, daß der erste Tropfenabscheider als Auflage für den zweiten Tropfenabscheider dient, so daß für letzteren keine eigene, gesonderte Auflage erforderlich ist. Dadurch ergeben sich nicht unbeträchtliche Materialkosteneinsparungen, also geringere Fertigungskosten. Letztlich kann die erfindungsgemäße Vorrichtung dadurch auch ein geringeres Gewicht aufweisen, was sich zusätzlich vorteilhaft auf die erforderlichen Abstützelemente und Fundamente auswirkt. Andererseits bietet diese Weiterbildung den Vorteil einer äußerst kompakten Vorrichtung, welche vor allem bei einer begrenzten Bauhöhe einsetzbar ist. Auf Grund der geringeren Bauhöhe ergeben sich auch geringere Mantel- und damit Apparatekosten. Die geringere Bauhöhe kann auch Vorteile bieten, sofern die erfindungsgemäße Vorrichtung in einem Gebäude, wie zum Beispiel einer Halle, untergebracht werden soll, da diese auf Grund der äußerst kompakten Bauweise eine geringere Bauhöhe aufweisen kann. Die erfindungsgemäße Vorrichtung weist auf Grund ihrer Kompaktheit also keine Beruhigungszonen zwischen erstem und zweitem Tropfenabscheider auf.

Gemäß einer anderen Weiterbildung der Erfindung sind erster Tropfenabscheider und zweiter Tropfenabscheider vorzugsweise mittels mehrerer Niederhalter zu einer kompakten Einheit miteinander verbunden. Derartige Niederhalter sind kostengünstig als Massenprodukte herstellbar und erhöhen daher die Herstellungskosten der erfindungsgemäßen Vorrichtung nur unwesentlich.

Erfindungsgemäß weist der zweite Tropfenabscheider mehrere Gestrick-Schichten auf, wobei jeder Schicht zur Abscheidung ein bestimmtes Tropfengrößenspektrum zugeordnet ist. Dadurch lassen sich bei der erfindungsgemäßen Vorrichtung die abgeschiedenen Tropfendurchmeser exakt einstellen, so daß der zweite Tropfenabscheider einen weiten Abscheidebereich in bezug auf die abgeschiedenen Tropfendurchmeser aufweist. Die bereichsweise Abscheidung läßt sich somit noch verfeinern.

Günstig ist ferner, daß die mehreren Schichten des zweiten Tropfenabscheiders aufeinander aufliegen. Dadurch ist die Gesamtschichthöhe des zweiten Tropfenabscheiders äußerst kompakt und kann im Vergleich zu einem zweiten Tropfenabscheider mit lediglich einer erhöhten Schicht, im wesentlichen konstant bleiben. Auch in diesem Fall dienen in Strömungsrichtung vorgeordnete Schichten als Auflage für die in Strömungsrichtung nachgeordneten Schichten mit den zuvor bereits in anderem Zusammenhang genannten Vorteilen.

Erfindungsgemäß sind die mehreren Schichten des zweiten Tropfenabscheiders derart übereinander angeordnet, daß sich die abgeschiedenen Tropfengrößen von unten nach oben hin, d.h. in Strömmgsrichtung des Gases, immer mehr verfeinern. Dadurch dient die vorgeordnete Schicht jeweils als Vor- oder Grobabscheideschicht für die nachgeordneten Schichten, so daß letztere weniger leicht verstopfen oder ihre Flutgrenze erreichen.

Gemäß einer anderen Weiterbildung der Erfindung weisen die mehreren Schichten des zweiten Tropfenabscheiders gleiche oder unterschiedliche spezifische Oberflächen auf. Dadurch lassen sich die Höhe des Druckverlustes pro m Schichthöhe des zweiten Tropfenabscheiders und auch der Abscheidegrad der jeweiligen Schicht den gewünschten Anforderungen entsprechend einstellen.

Ausführungsbeispiele des Erfindungsgegenstandes werden nachfolgend an Hand der Zeichnung näher erläutert. Es zeigen:
- Fig. 1: eine schematische, perspektivische Teilansicht einer Vorrichtung zum Abscheiden von Flüssigkeitstropfen aus strömenden Gasen; und
- Fig. 2: einen Querschnitt durch eine Vorrichtung zum Abscheiden von Flüssigkeitstropfen aus strömenden Gasen gemäß einer bevorzugten Ausführungsform.

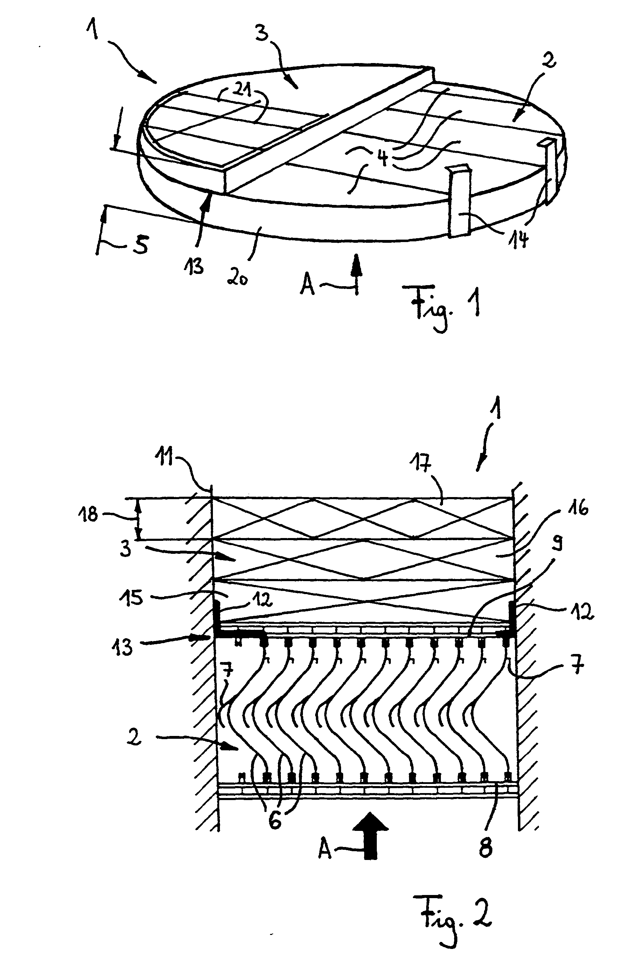

Eine Vorrichtung 1 zum Abscheiden von Flüssigkeitstropfen aus strömenden Gasen, insbesondere Luft, ist schematisch in einer perspektivischen Teilansicht in Fig. 1 dargestellt.

Die Vorrichtung 1 weist einen ersten Tropfenabscheider 2 und einen diesem in Strömungsrichtung, siehe Pfeil A in Fig. 1, des Gases unmittelbar nachgeordneten, zweiten Tropfenabscheider 3 auf, wobei ersterer als Vor- oder Grobabscheider und letzterer als Nach- oder Feinabscheider ausgebildet ist.

Gemäß dem in Fig. 2 gezeigten Ausführungsbeispiel der Erfindung ist der erste Tropfenabscheider ein Prallflächenabscheider 2 und der zweite Tropfenabscheider ein sogenannter Demister 3. Gemäß Fig. 1 haben beide Tropfenabscheider 2, 3 einen nmden Querschnitt. Erster Tropfenabscheider 2 und zweiter Tropfenabscheider 3 sind in Strömungsrichtung des Gases derart übereinander angeordnet, daß letzterer, nämlich der zweite Tropfenabscheider, auf ersterem, nämlich dem ersten Tropfenabscheider 2, aufliegt. Der besseren Übersicht halber ist der obere, zweite Tropfenabscheider 3 in Fig. 1 lediglich etwa zur Hälfte dargestellt. Es ist klar, daß der zweite Tropfenabscheider 3 in der Praxis vollständig, d.h. auch in der in Fig. 1 rechten Hälfte, auf dem ersten Tropfenabscheider 2 aufliegt.

Gemäß Fig. 1 ist der erste Tropfenabscheider 2 in einzelne Elemente 4 unterteilt, welche zusammen einen kreisrunden Querschnitt ergeben. So ist die in Fig. 1 rechte Hälfte in fünf Elemente 4 und die in Fig. 1 linke, von dem zweiten Tropfenabscheider 3 überdeckte Hälfte ebenfalls in Form von vier einzelnen Elementen 4 ausgebildet.

In einem Ausführungsbeispiel der Erfindung beträgt die Gesamthöhe des ersten Tropfenabscheiders 2 etwa 170 mm und die Gesamthöhe bzw. Schichtdicke des zweiten Tropfenabscheiders 3 etwa 150 mm. Üblicherweise schwankt die Gesamtschichtdicke des zweiten Tropfenabscheiders 3 zwischen 100 und 150 mm, so daß sich für die Gesamthöhe 5 der erfindungsgemäßen Vorrichtung 1 etwa ein Wert zwischen 250 und 400 mm ergibt.

In Fig. 2 ist die erfindungsgemäße Vorrichtung 1 im Querschnitt eines bevorzugten Ausführungsbeispiels dargestellt.

In diesem Fall ist der Prallflächenabscheider in Form mehrerer, nebeneinander angeordneter Profile 6 ausgebildet. Die Profilform ist aus Fig. 2 ersichtlich. Mittels der Profile 6 wird der gemäß dem Pfeil A in Fig. 2 in die Vorrichtung 1 einströmende Gasstrom zunächst nach links, dann nach rechts und anschließend wieder derart nach links umgelenkt, daß der den Prallflächenabscheider 2 verlassende Gasstrom parallel zu dem in den Prallflächenabscheider eintretenden Gasstrom, d.h. parallel zum Pfeil A, gerichtet ist.

Jedes Profil hat Elemente 7 zum Ableiten der Flüssigkeit, welche beispielsweise als Fangnasen oder als scharfkantige Erhöhungen ausgebildet sind. Der Profilabstand im Bereich der Unterseite 8 des Prallflächenabscheiders 2 beträgt in dem gewählten Ausführungsbeispiel etwa 20 mm, an der Oberseite 9 des Abscheiders 2 etwa 33 mm. Im Allgemeinen liegt der Profilabstand, wie vorerwähntes Ausführungsbeispiel zeigt, zwischen 20 und 33 mm.

Fig. 2 zeigt ferner, daß die beiden Tropfenabscheider 2, 3 von einem äußeren Mantel 11 umgeben sind, welcher in Fig 2 lediglich schematisch angedeutet ist. Der Mantel 11 kann, ebenso wie die Abscheider, einen runden, rechteckigen oder sonstwie gearteten Querschnitt haben.

Der Prallflächenabscheider 2 ist fest mit dem äußeren Mantel 11 verbunden, so daß seine Lage relativ zum Mantel fixiert ist. Dazu dienen beispielsweise L-förmige Befestigungsprofile 12, welche in Fig. 2 im Bereich der Oberseite 9 des Prallflächenabscheiders 2 angeordnet sind.

Gemäß Fig. 1 und 2 sind erster Tropfenabscheider 2 und zweiter Tropfenabscheider 3 zu einer kompakten Einheit 13 verbunden, indem mehrere Niederhalter 14, welche in regelmäßigen Abständen voneinander angeordnet sind, die beiden Tropfenabscheider 2 und 3 klammerförmig umfassen und dadurch den oberen, zweiten Tropfenabscheider 3 fest auf dem unteren, ersten Tropfenabscheider 2 halten. In Fig 1 sind der Einfachheit und besseren Übersicht halber lediglich zwei Niederhalter 14 gezeigt. Jeder Niederhalter ist etwa U-förmig ausgebildet und umgreift an seinem einen Ende den ersten Tropfenabscheider 2 sowie an seinem gegenüberliegenden, anderen Ende den zweiten Tropfenabscheider 3. Es ist klar, daß entlang dem Umfang der erfindungsgemäßen Vorrichtung 1 zahlreiche Niederhalter vorgesehen sind, damit die Tropfenabscheider in allen Betriebszuständen fest übereinander angeordnet sind. Der Einfachheit halber sind die Niederhalter 14 in Fig. 2 nicht gezeigt.

Gemäß dem in Fig. 2 gezeigten, bevorzugten Ausführungsbeispiel der Erfindung weist der zweite Tropfenabscheider 3 mehrere Gestrick-Schichten 15, 16, 17 auf, wobei jeder Schicht zur Abscheidung ein bestimmtes Tropfengrößenspektrum zugeordnet ist. Gemäß Fig. 2 liegen die Schichten aufeinander auf, wobei die unterste Schicht 15 unmittelbar oberhalb der Oberseite 9 des Prallflächenabscheiders 2, die mittlere Schicht 16 oberhalb der unteren Schicht 15 und die obere Schicht 17 unmittelbar oberhalb der mittleren Schicht 16 angeordnet ist. Die Schichten 15 - 17 sind derart übereinander angeordnet, daß sich die abgeschiedenen Tropfengrößen von unten nach oben hin, d.h. in Strömungsrichtung (siehe Pfeil A in Fig. 1 und 2) des Gases, immer mehr verfeinern.

Bei einer bestimmten Gasgeschwindigkeit werden also beispielsweise von dem Prallflächenabscheider 2 die Tropfengrößen ≥ 40 µm, von der unteren Schicht 15 des zweiten Tropfenabscheiders 3 Tropfengrößen zwischen 20 und 40 µm, von der mittleren Schicht 16 Tropfengrößen zwischen 10 und 20 µm und von der oberen Schicht 17 Tropfengrößen zwischen 5 und 10 µm abgeschieden. Sofern gewünscht, können noch weitere Schichten oberhalb der Schicht 17 angeordnet sein, um beispielsweise Tropfengrößen zwischen 1 und 5 µm abzuscheiden.

Üblicherweise besteht der zweite Tropfenabscheider in Form des Demisters 13 aus ein bis fünf Schichten, wobei gemäß der bevorzugten Ausführungsform in Fig. 2 lediglich drei Schichten, nämlich die Schichten 15 - 17, vorhanden sind. Die Schichthöhe 18 pro Schicht des Demisters beträgt beispielsweise etwa 50 mm. Gemäß dem gezeigten Ausführungsbeispiel haben die einzelnen Schichten 15 bis 17 des Demisters 3 unterschiedliche spezifische Oberflächen. Diese liegen zwischen 100 und 500 oder sogar zwischen 100 und 1000 m²/m³, wobei, wie in Fig. 2 angedeutet, die spezifische Oberfläche der Schichten 15 - 17 von unten nach oben hin, d.h. in Richtung des strömenden Gases, zunimmt. Mit Hilfe der erfindungsgemäßen Vorrichtung 1 ist daher eine bereichsweise Abscheidung der Flüssigkeitstropfen aus dem strömenden Gas mit den daraus sich ergebenden Vorteilen, wie sie zuvor beschrieben sind, möglich.

Der Prallflächenabscheider 2 ist gemäß Fig. 1 von einem mantelförmigen Ring 20 aus Stahl umgeben, an dem die einzelnen Niederhalter 14, welche vorzugsweise ebenfalls aus Stahl bestehen, fixiert sind. Ferner ist der Demister 3 mittels eines Stahlgitters 21 abgedeckt, das in Fig. 1 lediglich teilweise angedeutet ist. Diese Konstruktion hat den Vorteil, daß die Niederhalter nicht unmittelbar auf dem Demister 3 sondern auf dem Stahlgitter 21 aufliegen und daß ein gleichmäßiger, flächiger Kontakt zwischen den einzelnen Schichten des Demisters und zwischen dem Demister und dem Prallflächenabscheider unter allen Betriebszuständen gewährleistet ist. Insofern sind bei der erfmdungsgemäßen Vorrichtung mechanische Verformungen auf Grund hoher Gas-/Flüssigkeitsbelastung des erfindungsgemäßen Abscheiders weitgehend ausgeschlossen.

Dadurch ist eine Vorrichtung zum Abscheiden von Flüssigkeitstropfen aus strömenden Gasen, insbesondere Luft, geschaffen, welche sehr wirtschaftlich arbeitet und daher kostengünstig einsetzbar ist.

## Patentansprüche

1. Vorrichtung zum Abscheiden von Flüssigkeitstropfen aus strömenden Gasen, insbesondere Luft,
mit einem ersten, als Vor- oder Grobabscheider wirkenden Tropfenabscheider (2) und mit einem diesem in Strömungsrichtung (A) des Gases unmittelbar nachgeordneten, zweiten Tropfenabscheider (3), der als Nach- oder Feinabscheider ausgebildet ist,
wobei der erste Tropfenabscheider ein Prallflächenabscheider (2) und der zweite Tropfenabscheider ein Demister (3) mit mehreren Gestrick-Schichten (15, 16, 17) ist,
**dadurch gekennzeichnet,**
**dass** jeder Gestrick-Schicht (15, 16, 17) des zweiten Tropfenabscheiders (3) zur Abscheidung ein bestimmtes Tropfengrößenspektrum zugeordnet ist, sich die Spektren der einzelnen Schichten voneinander unterscheiden und die mehreren Gestrick-Schichten (15, 16, 17) derart übereinander angeordnet sind, dass sich die abgeschiedenen Tropfengrößen von unten nach oben hin, d.h. in Strömungsrichtung (A) des Gases, immer mehr verfeinern.

2. Vorrichtung nach Anspruch 1, **dadurch gekennzeichnet, dass** die mehreren Schichten (15, 16, 17) des zweiten Tropfenabscheiders (3) gleiche oder unterschiedliche spezifische Oberflächen aufweisen.

3. Vorrichtung nach einem der vorhergehenden Ansprüche, **dadurch gekennzeichnet, dass** die mehreren Schichten (15 - 17) des zweiten Tropfenabscheiders (3) aufeinander aufliegen.

4. Vorrichtung nach einem der vorhergehenden Ansprüche, **dadurch gekennzeichnet, dass** erster Tropfenabscheider (2) und zweiter Tropfenabscheider (3) derart übereinander angeordnet sind, dass letzterer (3) auf ersterem (2) aufliegt.

5. Vorrichtung nach einem der vorhergehenden Ansprüche, **dadurch gekennzeichnet, dass** erster Tropfenabscheider (2) und zweiter Tropfenabscheider (3) zu einer kompakten Einheit (13) verbunden sind.

6. Vorrichtung nach Anspruch 5, **dadurch gekennzeichnet, dass** erster Tropfenabscheider (2) und zweiter Tropfenabscheider (3) mittels mehrerer Niederhalter (14) miteinander verbunden sind.

## Claims

1. Device for separating liquid drops from flowing gases, particularly air, comprising a drop separator (2), operating as preliminary or coarse separator and a second drop separator (3) following directly the first drop separator in direction (A) of the gas flow, which second drop separator is operating as a follow up or fine separator, wherein the first drop separator is an impact separator (2) and the second drop separator is a demister (3) provided with several layers of knit wear (15, 16, 17), **characterized in that** each layer of knit wear (15, 16, 17) of the second drop separator (3) is separating a definite spectrum of size of drops such that the spectrums of the single layers differ from one another, and that the several layers of knit wear are superimposed in such a way that the sizes of the separated drops decrease continuously from below to above, i. e. in the direction (A) of the flowing gases.

2. Device according to claim 1, **characterized in that** the several layers (15, 16, 17) of the second drop separator (3) are provided with similar or different special surfaces.

3. Device according to one of the preceding claims, **characterized in that** the several layers (15 - 17) of the second drop separator (3) are following to one another.

4. Device according to one of the preceding claims, **characterized in that** the first drop separator (2) and the second drop separator (3) are superimposed such that the latter one (3) is positioned above the first one (2).

5. Device according to one of the preceding claims, **characterized in that** the first drop separator (2) and the second drop separator (3) are combined to form a compact unit (13).

6. Device according to claim 5, **characterized in that** the first drop separator (2) and the second drop separator (3) are connected to one another by means of several down holding devices.

## Revendications

1. Dispositif pour séparer des gouttes de liquide hors de gaz en écoulement, en particulier de l'air,
comprenant un premier séparateur de gouttes (2) faisant office de séparateur préalable ou de séparateur grossier, et comprenant un second séparateur de gouttes (3) agencé immédiatement en aval de celui-ci dans la direction d'écoulement (A) du gaz, qui est réalisé sous forme de séparateur postérieur ou de séparateur fin,
le premier séparateur de gouttes étant un séparateur à surface d'impact (2) et le second séparateur de gouttes étant un séparateur de brouillard (3) avec plusieurs couches de tricot (15, 16, 17),
**caractérisé en ce que**
à chaque couche de tricot (15, 16, 17) du second séparateur de gouttes (3) est associé un spectre déterminé de taille de gouttes, les spectres des couches individuelles diffèrent les uns des autres, et les plusieurs couches de tricot (15, 16, 17) sont agencées les unes au-dessus des autres de telle façon que les tailles de gouttes séparées deviennent de plus en plus fines du bas vers le haut (c'est-à-dire dans la direction d'écoulement (A) du gaz.

2. Dispositif selon la revendication 1, **caractérisé en ce que** les plusieurs couches (15, 16, 17) du second séparateur de gouttes (3) présentent des surfaces spécifiques identiques ou des surfaces spécifiques différentes.

3. Dispositif selon l'une des revendications précédentes, **caractérisé en ce que** les plusieurs couches (15-17) du second séparateur de gouttes (3) sont posées les unes sur les autres.

4. Dispositif selon l'une des revendications précédentes, **caractérisé en ce que** le premier séparateur de gouttes (2) et le second séparateur de gouttes (3) sont agencés l'un au-dessus de l'autre de telle façon que ce dernier (3) est posé sur le premier (2).

5. Dispositif selon l'une des revendications précédentes, **caractérisé en ce que** le premier séparateur de gouttes (2) et le second séparateur de gouttes (3) sont reliés en une unité compacte (13).

6. Dispositif selon la revendication 5, **caractérisé en ce que** le premier séparateur de gouttes (2) et le second séparateur de gouttes (3) sont reliés l'un à l'autre au moyen de plusieurs éléments de maintien vers le bas (14).
